# EUROPEAN PATENT SPECIFICATION

(11) **EP 4 091 506 B1**
(45) Date of publication and mention of the grant of the patent: **22.05.2024**
(21) Application number: 21181277.1
(22) Date of filing: 23.06.2021
(51) Int. Cl.: A47J 31/30

(54) **MOCHA POT**
MOKKAKANNE
POT DE MOKA

(30) Priority: 17.05.2021 CN 202121058761 U
(43) Date of publication of application: 23.11.2022
(73) Proprietor: Jiangmen City Xinhui Henglong Innovative Housewares Co., Ltd., Jiangmen Guangdong 529156 (CN)
(72) Inventor: NIE, Huayao, Jiangmen 529156 (CN)
(74) Representative: Appleyard Lees IP LLP

(56) References cited:
- WO-A1-00/45686
- WO-A1-2004/039226
- DE-U1-202009 017 448
- US-A- 3 757 670

## Description

### TECHNICAL FIELD

The present invention relates to the field of coffee making apparatus technologies, and more particularly, to a mocha pot.

### BACKGROUND

A mocha pot is a tool for extracting Italian espresso coffee. The mocha pot was popularized in Italian families at first due to a convenience in making coffee, and then was gradually developed into an Italian national product. Now the mocha pot has been sold all over the world and become a common coffee making tool in the world. The mocha pot usually implements heating with open flame, and the open fire needs to be used in heating, which is inconvenient in heating. Therefore, a mocha pot provided with a heating base has appeared at present, the heating base is connected with commercial power through a power line in heating, and then the mocha pot is placed on the heating base for heating. However, the mocha pot is inconvenient to carry due to the additionally arranged heating base.

Publication No. US3757670A discloses a two vessel electric coffeemaker, wherein water is forced from the lower vessel through a coffee container to the upper vessel so that the percolate is collected in the upper vessel is provided. A C-shaped electrical heating element is integrally formed with the base of the lower vessel to provide energy for the generation of steam. The steam provides the necessary pressure for forcing the percolate into the upper vessel. Once the coffee has percolated it is kept warm by a thermostatic switch that is positioned inside the C-shaped heating element in contact with the base of the lower vessel.

### SUMMARY

The present invention aims to solve at least one of the technical problems in the prior art. Therefore, the present invention provides a mocha pot which is convenient to heat and carry.

A mocha pot according to the present invention includes an upper pot body, a lower pot body, and a box body, wherein a storage cavity is arranged inside the upper pot body; the lower pot body is connected with a bottom portion of the upper pot body, an electric heater is mounted inside the lower pot body, and the electric heater is provided with a heating cavity; and the box body is mounted in the heating cavity, the box body is provided with a holding plate, the box body is provided with a water inlet communicated with the heating cavity below the holding plate, the box body is provided with a water outlet communicated with the storage cavity above the holding plate, and the water outlet is provided with a filter screen, wherein the lower pot body is also provided with a mounting bracket on which the electric heater is mounted and fixed; wherein the mounting bracket is provided with a limiting plate along a vertical direction, the limiting plate is recessed to form a limiting groove, and an outer wall of the electric heater is provided with a clamping block matched with the limiting groove.

The mocha pot according to the embodiments of the present invention at least has the following beneficial effects: according to the mocha pot, the electric heater is arranged inside the lower pot body, and water in the heating cavity is heated through the electric heater in use, so that the mocha pot does not need to be additionally provided with a heating base, thus being simpler in structure and more convenient in use, and the heating base does not need to be carried additionally when the mocha pot is carried, thus being convenient to carry.

According to some embodiments of the present invention, the electric heater is an alternating current electric heating apparatus, and the alternating current electric heating apparatus is provided with an alternating current power interface.

According to some embodiments of the present invention, the electric heater is a direct current electric heating apparatus, and the direct current electric heating apparatus is provided with a direct current power interface.

According to some embodiments of the present invention, the mocha pot is also provided with a built-in battery, and the built-in battery is connected with the direct current heating apparatus.

According to some embodiments of the present invention, the mounting bracket is provided with a positioning hole, and the electric heater is provided with a positioning column matched with the positioning hole.

According to some embodiments of the present invention, the mocha pot further includes a bottom cover, and the bottom cover is mounted at a bottom portion of the lower pot body.

According to some embodiments of the present invention, the electric heater is also connected with an on-off key for controlling on-off of the electric heater, and the on-off key is mounted on the bottom cover.

According to some embodiments of the present invention, the lower pot body is an insulation member.

The additional aspects and advantages of the present invention will be partially provided in the following description, and will partially be apparent in the following description, or learned by practice of the present invention.

### BRIEF DESCRIPTION OF THE DRAWINGS

The above and/or additional aspects and advantages of the present invention will be apparent and easily understood from the description of the embodiments with reference to the following accompanying drawings, wherein:
FIG. 1 is a schematic diagram of a stereoscopic structure of a mocha pot according to an embodiment of the present invention;
FIG. 2 is a schematic diagram of a cross-sectional structure of the mocha pot according to the embodiment of the present invention;
FIG. 3 is an exploded view of the mocha pot according to the embodiment of the present invention;
FIG. 4 is a schematic diagram of a structure of an electric heater of the mocha pot according to the embodiment of the present invention; and
FIG. 5 is a schematic diagram of a structure of a mounting bracket of the mocha pot according to the embodiment of the present invention.

### DETAILED DESCRIPTION

The embodiments of the present invention are described in detail hereinafter. Examples of the embodiments are shown in the accompanying drawings. The same or similar reference numerals throughout the accompanying drawings denote the same or similar elements or elements having the same or similar functions. The embodiments described hereinafter with reference to the accompanying drawings are exemplary and are only used to explain the present invention, but should not be understood as limiting the present invention.

In the description of the present invention, it is be understood that the orientation or position relationship indicated by the terms "up", "down", "front", "rear", "left", "right", and the like is based on the orientation or position relationship shown in the accompanying drawings, it is only for the convenience of description of the present invention and simplification of the description, and it is not to indicate or imply that the indicated device or element must have a specific orientation, and be constructed and operated in a specific orientation. Therefore, the terms shall not be understood as limiting the present invention.

In the description of the present invention, the meaning of several refers to be one or more, and the meaning of multiple refers to be more than two. The meanings of greater than, less than, more than, and the like are understood as not including this number, while the meanings of above, below, within, and the like are understood as including this number. If the terms "first" and "second" are described, the descriptions are used for the purpose of distinguishing the technical features only, and cannot be understood as indicating or implying relative importance, implicitly indicating the number of technical features indicated thereby, or implicitly indicating the order of technical features indicated thereby.

In the description of the present invention, the terms arrangement, mounting, connection and the like is to be understood in broad sense unless otherwise specified and defined. The specific meaning of the above terms in the present invention may be reasonably determined according to specific contents of the technical solutions by those skilled in the art.

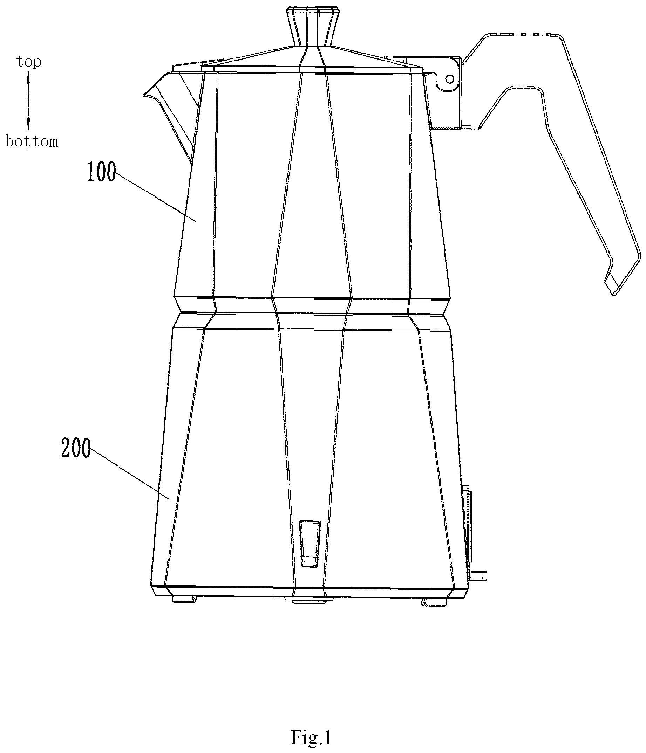

Referring to FIG. 1 to FIG. 3, a mocha pot of the embodiments of the present invention includes an upper pot body 100, a lower pot body 200, and a box body 300. A storage cavity 110 is arranged inside the upper pot body 100, and the storage cavity 110 is used for holding brewed coffee. The upper pot body 100 is also generally provided with a pot cover, and the pot cover is arranged above the storage cavity 110. The lower pot body 200 is connected with a bottom portion of the upper pot body 100, wherein an electric heater 400 is mounted inside the lower pot body 200, and the electric heater 400 is provided with a heating cavity 410. The heating cavity 410 is used for holding water, and the electric heater 400 heats water in the heating cavity 410 during operation. The box body 300 is mounted in the heating cavity 410, wherein the box body 300 is provided with a holding plate 310, the holding plate 310 is used for placing coffee powder, and the holding plate 310 may be provided with a fine hole for water to pass through. The box body 300 is provided with a water inlet 320 communicated with the heating cavity 410 below the holding plate 310, the box body 300 is provided with a water outlet 330 communicated with the storage cavity 110 above the holding plate 310, and the water outlet 330 is provided with a filter screen 340. The electric heater 400 is powered on to heat the water in the heating cavity 410 in use, and a large amount of water vapor is generated after the water is heated to boil, so that an air pressure in the heating cavity 410 is increased. Under an action of the air pressure, hot water in the heating cavity 410 enters an inside of the box body 300 through the water inlet 320 of the box body 300 and rises to the holding plate 310, and the hot water brews the coffee powder on the holding plate 310 to form a coffee liquid. The coffee liquid continues to rise to pass through the water outlet 330, is filtered by the filter screen 340, and then enters the storage cavity 110 of the upper pot body 100. After the coffee liquid in the storage cavity 110 is cooled, a user may pour out the coffee for drinking through the upper pot body 100.

According to some embodiments, the electric heater 400 is arranged inside the lower pot body 200, and the water in the heating cavity 410 is heated through the electric heater 400 in use, so that the mocha pot does not need to be additionally provided with a heating base, thus being simpler in structure and more convenient in use, and the heating base does not need to be carried additionally when the mocha pot is carried, thus being convenient to carry.

In some embodiments of the present invention, the electric heater 400 is an alternating current electric heating apparatus, and the alternating current electric heating apparatus is provided with an alternating current power interface 450. When the alternating current electric heating apparatus needs to be powered on, the alternating current electric heating apparatus may be powered on to heat the water in the heating cavity 410 only by connecting one end of a power line to the alternating current power interface 450 and connecting the other end of the power line to an indoor socket or other commercial power interfaces, thus being very convenient to use.

In some other embodiments of the present invention, the electric heater 400 is a direct current electric heating apparatus, and the direct current electric heating apparatus is provided with a direct current power interface. When the direct current electric heating apparatus needs to be powered on, the direct current electric heating apparatus may be powered on to heat the water in the heating cavity 410 only by connecting one end of the power line to the direct current power interface and connecting the other end of the power line to a direct current power supply.

In the above embodiment, in order to further improve a convenience in use, the mocha pot is also provided with a built-in battery, and the built-in battery is connected with the direct current heating apparatus, so that when a power supply is difficult to be obtained outdoors, the direct current electric heating apparatus may heat through power supplied by the built-in battery. Therefore, the user may still use the mocha pot in a case of no power supply outdoors. The built-in battery may be a rechargeable battery, which is connected with the direct current power interface. When the direct current electric heating apparatus is connected with an external power supply through the direct current power interface for heating, the external power supply charges the built-in battery at the same time. Certainly, the built-in battery may also be a non-rechargeable battery, and the built-in battery needs to be replaced after power is used up.

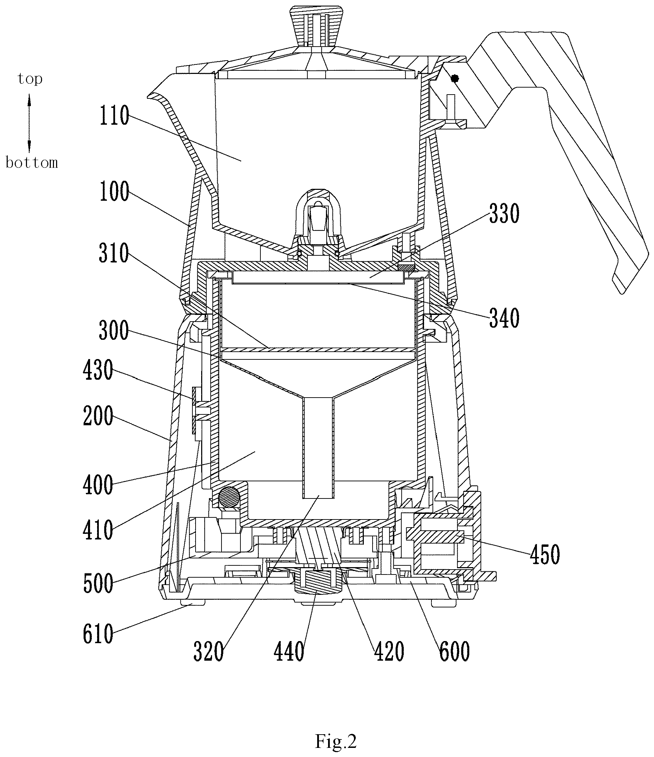

Referring to FIG. 2, according to the present invention, the lower pot body 200 is also provided with a mounting bracket 500, and the electric heater 400 is mounted on the mounting bracket 500. The lower pot body 200 is provided with the mounting bracket 500, so that the electric heater 400 may be more stably mounted inside the lower pot body 200.

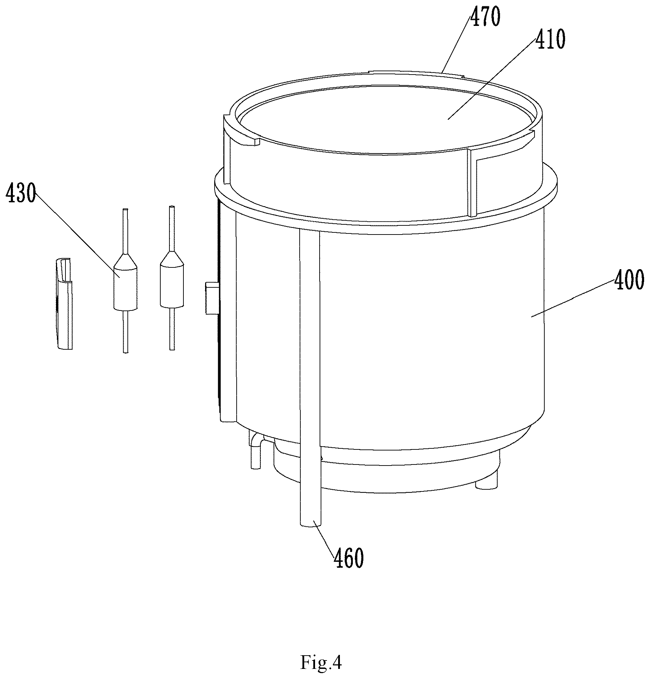

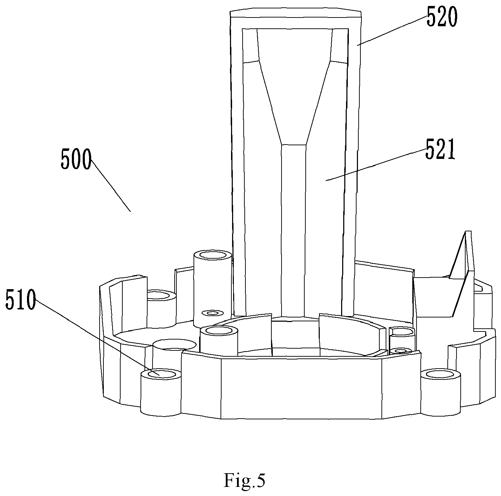

Referring to FIG. 4 and FIG. 5, in the above embodiment, the mounting bracket 500 is provided with a positioning hole 510, and the electric heater 400 is provided with a positioning column 460 matched with the positioning hole 510. Specifically, a main body of the mounting bracket has a disk-shaped structure, a plurality of positioning holes 510 may be provided, and the plurality of positioning holes 510 are distributed at an upper end of the mounting bracket. The bottom portion of the electric heater 400 protrudes to form a plurality of positioning columns 460, and each positioning column 460 is inserted into the corresponding positioning hole 510, so that the electric heater 400 may be stably mounted on the mounting bracket 500.

Referring to FIG. 4 and FIG. 5, in some embodiments of the present invention, the electric heater 400 is generally barrel-shaped and has a high height in a vertical direction. Therefore, according to the invention, the mounting bracket 500 is provided with a limiting plate 520 along a vertical direction, the limiting plate 520 is recessed to form a limiting groove 521, and an outer wall of the electric heater 400 is provided with a clamping block 470 matched with the limiting groove 521. The clamping block 470 is clamped into the limiting groove 521 during mounting, so that the electric heater 400 may be limited and fixed in the vertical direction. Furthermore, the limiting plate 520 may support the electric heater 400 to prevent the electric heater 400 from shaking to affect heating.

Referring to FIG. 2, in some embodiments of the present invention, the mocha pot further includes a bottom cover 600, and the bottom cover 600 is mounted at a bottom portion of the lower pot body 200. The bottom cover 600 may seal the bottom portion of the lower pot body 200 to prevent foreign matters such as dust from entering the lower pot body 200. A lower end of the bottom cover 600 may also be provided with a supporting block 610, the supporting block 610 may be made of an elastic material, thus having a good elasticity. The supporting block 610 plays a role of supporting the mocha pot, and since the supporting block 610 has a certain elasticity, collision between the mocha pot and a desktop can be reduced when placing the mocha pot.

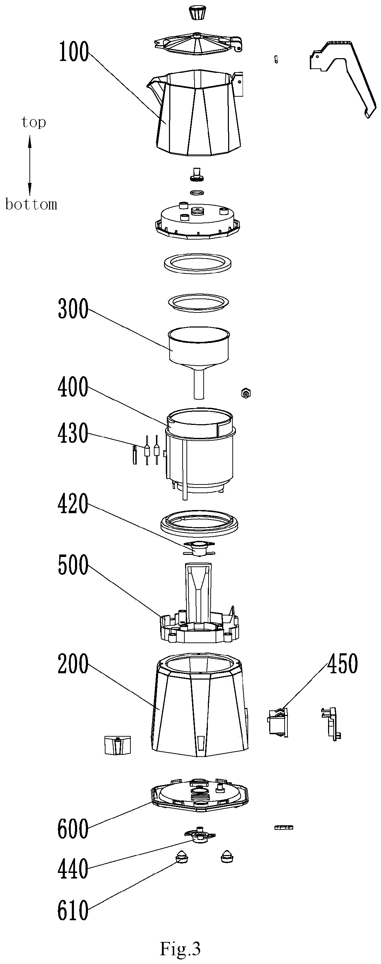

Referring to FIG. 2 and FIG. 3, in some embodiments of the present invention, the electric heater 400 is also connected with an on-off key 440 for controlling on-off of the electric heater, and the on-off key 400 is mounted on the bottom cover 600. Specifically, a middle portion of the bottom cover 600 is provided with a mounting position, and the on-off key 440 is mounted in the mounting position. The user may control the on-off of the electric heater 400 by pressing the on-off key 440.

Referring to FIG. 2 and FIG. 3, certainly, the electric heater 400 may also be provided with a temperature controller 420, and the temperature controller 420 may be a kick-type temperature controller 420 or other temperature controllers 420. When a temperature of the electric heater 400 is excessively high, the temperature controller 420 generates an action to cut off a current of the electric heater 400, so as to avoid a fire caused by overheating of the electric heater 400. In order to further improve a use safety of the mocha pot, the electric heater 400 may also be provided with a thermal fuse 430, and the thermal fuse 430 is mounted on an outer wall of the electric heater 400 through a pressing block. When the electric heater 400 overheats and the temperature controller 420 fails to cut off the current, the thermal fuse 430 generates an action to cut off the current of the electric heater 400, thus playing a double protection role.

In some embodiments of the present invention, the lower pot body 200 is an insulation member. For example, the lower pot body 200 may be a plastic member, and the plastic member has a good heat insulation performance and a good insulation performance at the same time. Therefore, leaked electricity of the electric heater 400 may be prevented from being conducted to the lower pot body 200, and meanwhile, and heat generated by the electric heater 400 during heating transferred to an outside of the lower pot body 200 can be reduced, thus decreasing temperature rise of the lower pot body 200, and being beneficial for improving the convenience in use.

The embodiments of the present invention are described in detail with reference to the accompanying drawings above, but the present invention is not limited to the above embodiments, and various changes may also be made by those of ordinary skills in the art insofar as they are encompassed by the scope of the appended claims.

## Claims

1. A mocha pot, comprising:
an upper pot body (100), wherein a storage cavity (110) is arranged inside the upper pot body (100);
a lower pot body (200), connected with a bottom portion of the upper pot body (100), wherein an electric heater (400) is mounted inside the lower pot body (200), and the electric heater (400) is provided with a heating cavity (410); and
a box body (300) mounted in the heating cavity (410), wherein the box body (300) is provided with a holding plate (310), the box body (300) is provided with a water inlet (320) communicated with the heating cavity (410) below the holding plate (310), the box body (300) is provided with a water outlet (330) communicated with the storage cavity (110) above the holding plate (310), and the water outlet (330) is provided with a filter screen (340), **characterized in that**:
the lower pot body (200) is also provided with a mounting bracket (500) on which the electric heater (400) is mounted and fixed;
and **in that** the mounting bracket (500) is provided with a limiting plate (520) along a vertical direction, the limiting plate (520) is recessed to form a limiting groove (521), and an outer wall of the electric heater (400) is provided with a clamping block (470) matched with the limiting groove (521).

2. The mocha pot of claim 1, wherein the electric heater (400) is an alternating current electric heating apparatus, and the alternating current electric heating apparatus is provided with an alternating current power interface.

3. The mocha pot of claim 1, wherein the electric heater is a direct current electric heating apparatus, and the direct current electric heating apparatus is provided with a direct current power interface.

4. The mocha pot of claim 3, wherein the mocha pot is also provided with a built-in battery, and the built-in battery is connected with the direct current heating apparatus.

5. The mocha pot of claim 1, wherein the mounting bracket (500) is provided with a positioning hole (510), and the electric heater (400) is provided with a positioning column (460) matched with the positioning hole (510).

6. The mocha pot of claim 1, wherein the mocha pot further comprises a bottom cover (600), and the bottom cover (600) is mounted at a bottom portion of the lower pot body (200).

7. The mocha pot of claim 6, wherein the electric heater (400) is also connected with an on-off key (440) for controlling on-off of the electric heater (400), and the on-off key (440) is mounted on the bottom cover.

8. The mocha pot of any one of claims 1 to 7, wherein the lower pot body (200) is an insulation member.

## Patentansprüche

1. Mokkakanne, Folgendes umfassend:
einen oberen Kannenkörper (100), wobei eine Fassungskammer (110) innerhalb des oberen Kannenkörpers (100) angeordnet ist;
einen unteren Kannenkörper (200), der mit einem Bodenabschnitt des oberen Kannenkörpers (100) verbunden ist, wobei eine elektrische Heizung (400) innerhalb des unteren Kannenkörpers (200) montiert ist und wobei die elektrische Heizung (400) mit einer Heizkammer (410) versehen ist; und
einen Kastenkörper (300), der in der Heizkammer (410) montiert ist, wobei der Kastenkörper (300) mit einer Halteplatte (310) versehen ist, wobei der Kastenkörper (300) mit einem Wassereinlass (320) versehen ist, der mit der Heizkammer (410) unter der Halteplatte (310) kommuniziert, wobei der Kastenkörper (300) mit einem Wasserauslass (330) versehen ist, der mit der Fassungskammer (110) über der Halteplatte (310) kommuniziert, und wobei der Wasserauslass (330) mit einem Filtersieb (340) versehen ist, **dadurch gekennzeichnet, dass**:
der untere Kannenkörper (200) außerdem mit einer Montagehalterung (500) versehen ist, an der die elektrische Heizung (400) montiert und fixiert ist;
und dadurch, dass die Montagehalterung (500) entlang einer vertikalen Richtung mit einer Begrenzungsplatte (520) versehen ist, wobei die Begrenzungsplatte (520) vertieft ist, um eine Begrenzungsnut (521) auszubilden, und wobei eine Außenwand der elektrischen Heizung (400) passend zur Begrenzungsnut (521) mit einem Einspannblock (470) versehen ist.

2. Mokkakanne nach Anspruch 1, wobei die elektrische Heizung (400) eine elektrische Heizvorrichtung mit Wechselstrom ist und die elektrische Heizvorrichtung mit Wechselstrom mit einer Wechselstromschnittstelle versehen ist.

3. Mokkakanne nach Anspruch 1, wobei die elektrische Heizung eine elektrische Heizvorrichtung mit Gleichstrom ist und die elektrische Heizvorrichtung mit Gleichstrom mit einer Gleichstromschnittstelle versehen ist.

4. Mokkakanne nach Anspruch 3, wobei die Mokkakanne außerdem mit einer eingebauten Batterie versehen ist und die eingebaute Batterie mit der Gleichstromheizvorrichtung verbunden ist.

5. Mokkakanne nach Anspruch 1, wobei die Montagehalterung (500) mit einer Positionierungsbohrung (510) versehen ist und die elektrische Heizung (400) mit einer zur Positionierungsbohrung (510) passenden Positionierungssäule (460) versehen ist.

6. Mokkakanne nach Anspruch 1, wobei die Mokkakanne ferner eine Bodenabdeckung (600) umfasst und die Bodenabdeckung (600) am Bodenabschnitt des unteren Kannenkörpers (200) montiert ist.

7. Mokkakanne nach Anspruch 6, wobei die elektrische Heizung (400) außerdem mit einem Ein-Aus-Schalter (440) verbunden ist, um die elektrische Heizung (400) ein- und auszuschalten, und wobei der Ein-Aus-Schalter (440) an der Bodenabdeckung montiert ist.

8. Mokkakanne nach einem der Ansprüche 1 bis 7, wobei der untere Kannenkörper (200) ein Isolierelement ist.

## Revendications

1. Cafetière italienne, comprenant :
un corps de cafetière supérieur (100), une cavité formant réservoir (110) étant définie à l'intérieur du corps de cafetière supérieur (100) ;
un corps de cafetière inférieur (200), raccordé à une partie inférieure du corps de cafetière supérieur (100), un dispositif de chauffage électrique (400) étant installé à l'intérieur du corps de cafetière inférieur (200), et le dispositif de chauffage électrique (400) étant pourvu d'une cavité de chauffage (410) ; et
un corps formant réceptacle (300) installé dans la cavité de chauffage (410), le corps formant réceptacle (300) étant pourvu d'une plaque de support (310), le corps formant réceptacle (300) étant pourvu d'une entrée d'eau (320) disposée en communication avec la cavité de chauffage (410) sous la plaque de support (310), le corps formant réceptacle (300) étant pourvu d'une sortie d'eau (330) disposée en communication avec la cavité formant réservoir (110) au-dessus de la plaque de support (310), et la sortie d'eau (330) étant pourvue d'un tamis (340), **caractérisée en ce que** :
le corps de cafetière inférieur (200) est également pourvu d'un support d'installation (500) sur lequel le dispositif de chauffage électrique (400) est installé et fixé ;
et **en ce que** le support d'installation (500) est pourvu d'une plaque de limitation (520) le long d'une direction verticale, la plaque de limitation (520) est renfoncée de façon à former une rainure de limitation (521), et une paroi extérieure du dispositif de chauffage électrique (400) est pourvue d'un bloc de calage (470) correspondant à la rainure de limitation (521).

2. Cafetière italienne selon la revendication 1, dans laquelle le dispositif de chauffage électrique (400) est un appareil de chauffage électrique à courant alternatif, et l'appareil de chauffage électrique à courant alternatif est pourvu d'une interface d'alimentation à courant alternatif.

3. Cafetière italienne selon la revendication 1, dans laquelle le dispositif de chauffage électrique est un appareil de chauffage électrique à courant continu, et l'appareil de chauffage électrique à courant continu est pourvu d'une interface d'alimentation à courant continu.

4. Cafetière italienne selon la revendication 3, la cafetière italienne étant également pourvue d'une batterie intégrée, et la batterie intégrée étant raccordée à l'appareil de chauffage à courant continu.

5. Cafetière italienne selon la revendication 1, dans laquelle le support d'installation (500) est pourvu d'un trou de positionnement (510), et le dispositif de chauffage électrique (400) est pourvu d'une colonne de positionnement (460) correspondant au trou de positionnement (510).

6. Cafetière italienne selon la revendication 1, la cafetière italienne comprenant, en outre, un couvercle inférieur (600), et le couvercle inférieur (600) étant installé au niveau d'une partie inférieure du corps de cafetière inférieur (200).

7. Cafetière italienne selon la revendication 6, dans laquelle le dispositif de chauffage électrique (400) est également raccordé à un bouton marche/arrêt (440) pour commander la mise en marche/l'arrêt du dispositif de chauffage électrique (400), et le bouton marche/arrêt (440) est installé sur le couvercle inférieur.

8. Cafetière italienne selon l'une quelconque des revendications 1 à 7, dans laquelle le corps de cafetière inférieur (200) est un élément isolant.
